# EUROPEAN PATENT APPLICATION

(11) **EP 1 514 906 A1**
(43) Date of publication of application: **16.03.2005**
(21) Application number: 03020681.7
(22) Date of filing: 11.09.2003
(51) Int. Cl.: C09B 69/06, C09B 69/02, G11B 7/24

(54) **Lightfast cyanine dye compositions for optical data recording**

(71) Applicant: CLARIANT INTERNATIONAL LTD., 4132 Muttenz (CH)
(72) Inventor: The designation of the inventor has not yet been filed

(57) **Abstract**

The invention relates to novel dye compositions comprising at least one cationic cyanine dye and at least one anionic optical brightener, which provide for high lightfastness and excellent recording characteristics when used as optical layer in optical recording media. The invention also relates to a process for preparing these dye compositions as well as to their use as optical layer in optical recording media.

## Description

The invention relates to novel dye compositions comprising at least one cationic cyanine dye and at least one anionic optical brightener, which provide for high lightfastness and excellent recording characteristics when used as optical layer in optical recording media. The invention also relates to a process for preparing these dye compositions as well as to their use as optical layer in optical recording media.

Cationic cyanine dyes with inorganic anions have attracted considerable attention in the field of 780 and 660-635 nm red diode-laser optical storage due to their excellent recording properties in the fields of compact discs (CD-R) and recordable digital versatile discs (DVD-R). As disclosed in US 5,976,658, these dyes are suitable in the respective fields due to their excellent optical and thermal properties.

General requirements for dyes used in optical recording media are strong absorption, high reflectance, high recording sensitivity, low thermal conductivity as well as light and thermal stability, durability for storage and non-toxicity.

For industrial application, organic dyes in the field of diode-laser optical storage have to be suitable for the spin coating process to prepare thin films, i.e. they have to be sufficiently soluble in the organic solvents generally applied in the spin coating process.

However, the value of many organic dyes, e.g. cyanine dyes, in in the field of diode-laser optical storage is limited due to their low stability against sunlight. Cationic cyanine dyes are by far inferior to dyes based on metal-azo chemistry and others. Therefore, for industrial application in commercial systems a strong enhancement of the lightfastness of recording media based on cyanine dyes is required.

In principal there are two different pathways described in the prior art to achieve this:

Firstly, cyanine dyes with inorganic counterions can be combined with suitable, light-protective compounds. US 6,165,580 discloses combinations of cyanine dyes with tetraphenylphenylene diamine. EP 0 905 202 discloses mixtures with transition metal 1,2-dithiophenol complexes. US 6,306,478 discloses combinations of cyanine dyes with oxygen quenchers, UV absorbers and antioxidants. EP 0 837 457 discloses an enhancement of lightfastness by adding nickel-formazan-complexes. EP 0 820 257 claims an enhancement of light-fastness by addition of quinodimethane derivatives.

However, all these materials have the drawback of a complicated synthesis. Further, due to the different stability and solubility of the dye and the protective agent, there are considerable difficulties in the recycling of formulations based on cyanine dyes with these compounds from various solvents, e.g. tetrafluoropropanol.

Secondly, the combination of cyanine dyes with organic counterions based on the tetracyanoquinodimethane structure are proposed in the prior art, e.g. as disclosed in EP 1 142 961 and JP2002178640 as well as cyanine dye / metal-azo complexes to enhance lightfastness of the recording layer, e.g. as disclosed in EP 1 178 083, WO 98/28737 and EP 1 174 472.

However, the synthesis of all these combinations is complicated and starts from expensive raw materials.

DE 100 16 669 discloses anionic optical brightners suitable for optical recording media at a wavelength of 340-410 nm with cations selected from the group Na⁺, Li⁺, NH₄⁺ and N(C₁₋₁₂alkyl)4⁺. These materials are not suitable for DVD-R recording media due to their absorbtions at short wavelenghts.

The present invention therefore relates to compositions of at least one cationic cyanine dye with at least one anionic optical brightener, which are easily accessible from available starting materials and which are easy to recycle after dissolving in various solvents.
The invention further relates to a process for preparing these dye compositions as well as to their use as optical layer in optical recording media.

More particularly, the invention relates to cyanine-(benz)oxazole combinations, cyanine-benzo[b]furane, cyanine-pyrazoline and cyanine-stilbene combinations.

In a preferred embodiment, the invention relates to cyanine dye / optical brightener compositions suitable as a high-density recording material for write once read many (WORM) type optical recording media in a laser wavelength range of 500 from 700 nm.

The present invention provides a composition comprising at least one cationic cyanine dye of the general formula (I) 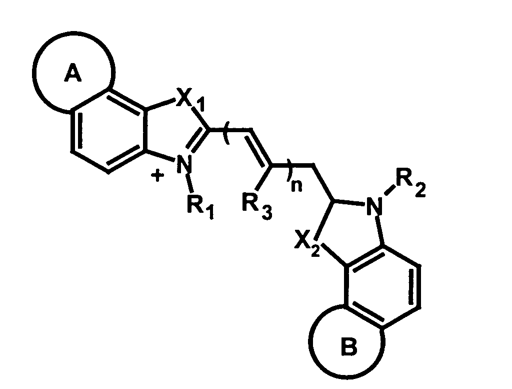 wherein
- A and B: represent, independently from each other, two hydrogen atoms or an anellated benzo ring in the positions [4,5], [5,6] or [6,7] of both indoline parts;
- R₁ and R₂: represent, independently from each other, a C₁-C₈ alkyl, a C₁-C₈ alkylidene, a benzyl radical, optionally substituted by one or more C₁-C₈ alkoxy carbonyl, C₁-C₈ alkyl, C₁-C₈ alkoxy, nitro or dialkylamino radicals;
- R₃ is: a hydrogen radical a C₁-C₈ alkyl, a C₁-C₈ alkylidene, a benzyl radical, optionally substituted by one or more C₁-C₈ alkoxy carbonyl, C₁-C₈ alkyl, C₁-C₈ alkoxy, nitro or dialkylamino radicals;
- X₁ and X₂: represent, independently from each other, O, S, C(CH₃)₂, NR' radicals, wherein R' is a C₁-C₈ alkyl, a C₁-C₈ alkylidene, a benzyl radical, optionally substituted by one or more C₁-C₈ alkoxy carbonyl, C₁-C₈ alkyl, C₁-C₈ alkoxy, nitro or dialkylamino radicals; and
- n is: 0 or 1;
and at least one anionic optical brightener selected from the group consisting of the general formulae (II), (III), (IV) or (V) in a stoichiometric ratio 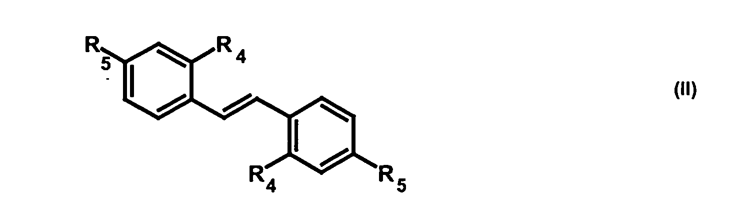 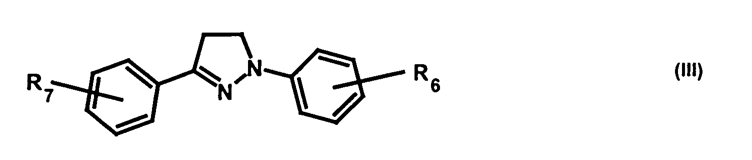 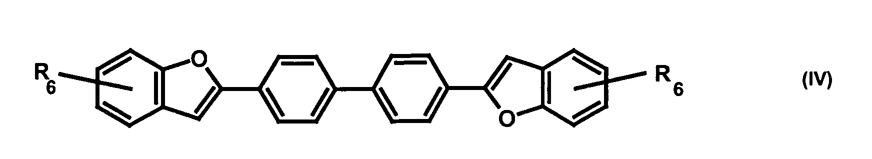 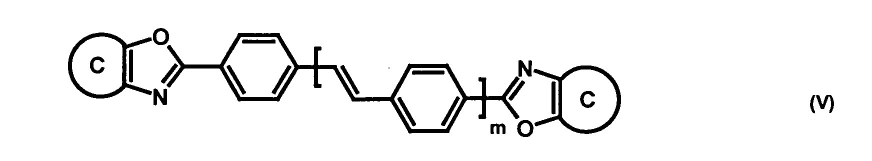 wherein,
the total negative charge of the anion is 2, 4 or 6;
- R₄: is hydrogen, an oxy, an oxycarbonyl or an oxysulfonyl radical;
- R₆: is an oxysulfonyl, an oxycarbonyl or 2-(oxysulfonyl)ethylsulfonyl radical;
- R₇: is hydrogen or one or more C₁-C₄ alkyl or chlorine radicals;
- R₅: is a hydrogen, a C₁-C₈ alkyl, a C₁-C₈ alkoxy, a 2-benzoxazole, which is optionally substituted at the benzo ring with one or more C₁-C₄ alkyl or C₁-C₄ alkoxy radicals, a dialkylamino, a 2-benzotriazyl, a 2-(4-phenyl)triazyl, which can be substituted by one or more C₁-C₄ alkyl, C₁-C₄ alkoxy or halogen radicals or an amino radical, or which can be further substituted with a radical of the formula 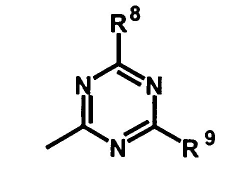 wherein
- R₈ and R₉: represent, independently from each other, a C₁-C₄ alkoxy, a N-morpholino, a C₁-C₄ dialkylamino, a di(2-hydroxyethyl)amino, a (2-hydroxyethyl)amino or a phenylamino radical which carries 0-2 oxysulfonyl radicals;
- ring C: represents a benzo ring or a 5-phenyl radical, both bearing either one oxysulfonyl, one oxycarbonyl or one 2-(oxysulfonyl)ethylsulfonyl radical;
m is 0 or 1.

In a preferred embodiment, the present invention provides a composition wherein the cationic cyanine dye is of formula (Ia) 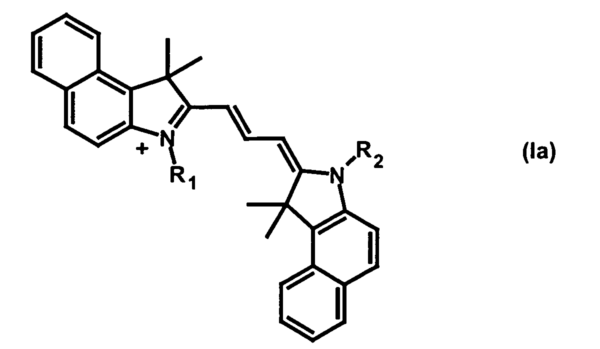 wherein R₁ and R₂ are defined as above.

In a more preferred embodiment, the present invention provides a composition wherein the cationic cyanine dye is of formula (Ia) and the anionic optical brightener is of the general formula (II) or (III).

The new cyanine dye / optical brightener compositions are easily obtainable in high yields from readily available starting materials and do not require the development of novel synthetic methods. The combinations are accessible from cyanine dyes, bearing halogen, particularly iodide counterions, and optical brighteners, particularly of sulphonic or carboxylic acid derivatives of oxazoles, benzoxazoles, benzo[b]furans, pyrazolines and stilbenes in the form of alkali salts, particularly sodium salts.

The combinations of cationic cyanine dyes and anions are obtained in stoichoimetric rations, which means that each negative charge of the anion is compensated by exactly one cationic charge of the cyanine dye. Preferred ratios of cation to anion are 2:1,4:1 and 6:1.

It has been found that stoichiometric compositions of cations of formula (I) and anions of formulae (II), (III), (IV) or (V) can be advantageously prepared by reacting halides of cations of formula (I), preferably the iodides with a stoichiometric amount of alkali salts of anions of formula (II), (III), (IV) of (V), preferably the sodium salts.
More preferably, the resulting compositions do not contain any other salts.

The compositions are prepared in an inert solvents such as alcohols (preferably C₁-C₄ alcohols), glycolethers or dimethylformamide, dimethylacetamide, N-methylpyrrolidone or N,N'-dimethylpropylidne urea.

Alternatively, the compositions of cations of formula (I) and anions of formulae (II), (III), (IV) or (V) can be easily prepared by mixing the above described reagents in hot solvents, filtering the hot mixture to remove the alkali halides and isolating the composition after cooling and precipitation. Preferably, the isolation is carried out by pouring the hot reaction mixture into water, filtration of the precipitate and washing with water to remove the alkali halides.

The advantage of this process is to start from easily accessible and stable raw materials. For example, iodides of cations of formula (Ib) and (Ic) 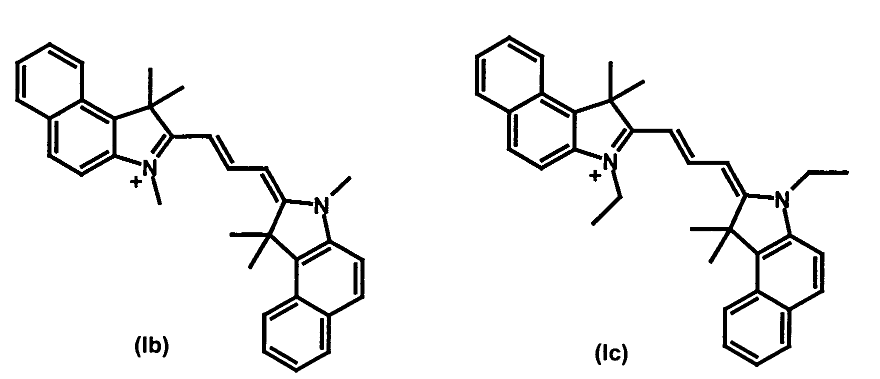 are commercially available. Various sodium salts of anions of formulae (II), (III), (IV) and (V) are also commercially available.

For the use as optical layer in optical recording media, the compositions according to the invention are applied in the manufactured by the following steps:
(a) providing a first substrate
(b) dissolving the compositions according to the invention in an organic solvent to form a solution,
(c) coating the solution on the first substrate;
(d) drying the solution to form a dye layer of the composition (the optical layer or recording layer).

The following steps are conventional steps to finish the optical data storage media:
(e) deposing a reflection layer on top of the optical layer;
(f) deposing a second substrate on top of the reflection layer.

In the step (b), the organic solvent can be C₁₋₈ alcohol, C₁₋₈ ketone, C₁₋₈ ether, halogen alkane or a tertiary amide. Wherein C₁₋₈ alcohol can be methanol, ethanol, isopropanol, diacetone alcohol (DAA), 2,2,3,3-tetrafluoropropanol, trichloroethanol, 2-chloroethanol, octafluoropentanol or hexafluorobutanol. C₁₋₈ ketone can be acetone, methylisobutylketone, methylethylketone, or 3-hydroxy-3-methyl-2-butanone; the halogen alkane can be chloroform, dichloromethane, or 1-chlorobutane; and the tertiary amide can be dimethylformamide, N-methylpyrrolidone, dimethylacetamide or N,N'-dimethylpropylidene urea.

After the composition of the invention is dissolved in the above-mentioned organic solvent, it is in step (c) coated on the first substrate by spray, roller, dip or, preferably, spin coating or related processes. Then in step (d), the solvent is evaporated by common techniques to form a layer of the composition on the first substrate.
Step (e) is carried out by common techniques, preferably sputtering of metals as Al, Si, Au or, preferably, Ag. In step (f), another substrate is attached to the substrate by common techniques to form the high-density optical disc recording medium.

Effectively, the cyanine dye / optical brightener compositions according to the invention possess the required optical characteristics for optical data storage, an excellent solubility in organic solvents, an excellent light stability and a high decomposition temperature.

In particular, the compositions according to the invention provide for high lightfastness and excellent recording characteristics when used as optical layer in optical recording media.

The compositions according to the invention possess an enhanced light fastness compared to inorganic salts of cation (I) and, due to their high temperature stability, they can be recycled from various solvents without decomposition on evaporation.

### Examples

Examples 1-4 are prepared using standard procedures involving reaction of the appropriate cyanine dye with the corresponding optical brightener salt in an organic solvent. The complexes are prepared by mixing the reagents in hot solvents.
The isolation of the complexes is carried out by filtration of the hot mixture to remove the alkali halides and precipitation by cooling and filtration or by pouring the hot reaction mixture into water, filtration of the precipitation and washing with water to remove the alkali halides. The cyanine-optical brightener complexes can be purified by recrystallization from dimethylformamide.

### Example 1

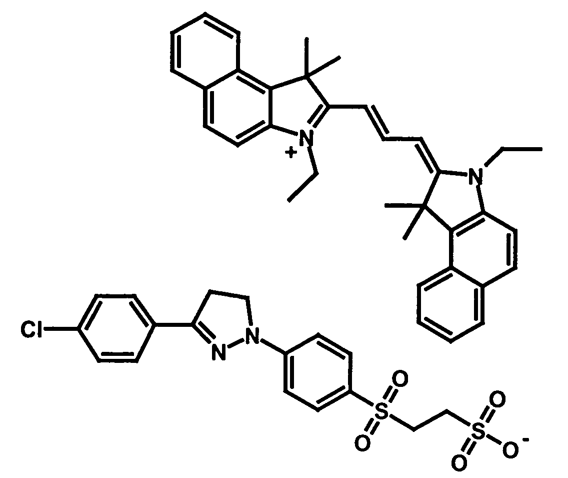

M. P. 326 °C.

### Example 2

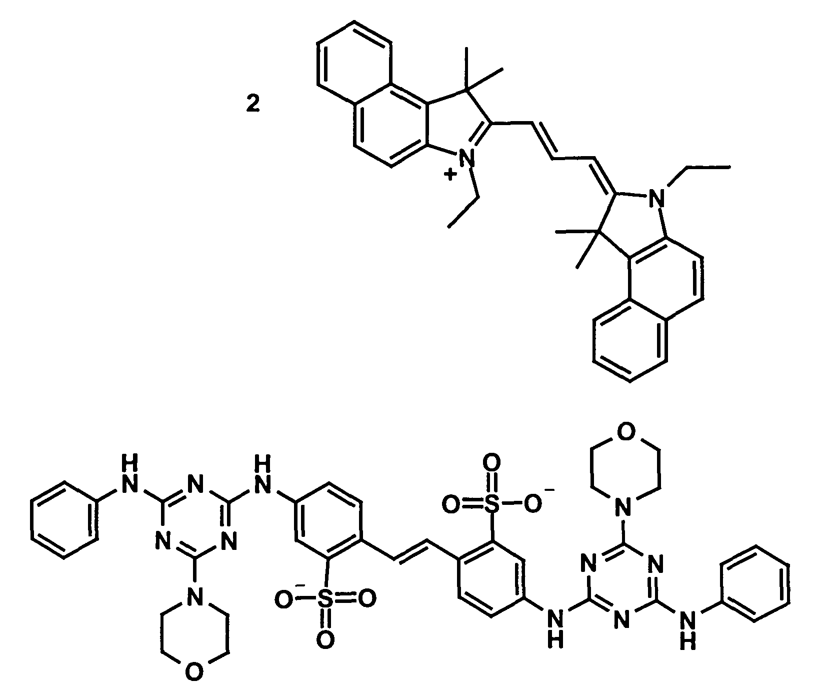

UV-Vis (MeOH) λ: 216 nm, 585 nm; ε (λ): 156,9 l/(g*cm), 138,2 l/(g*cm).

### Example 3

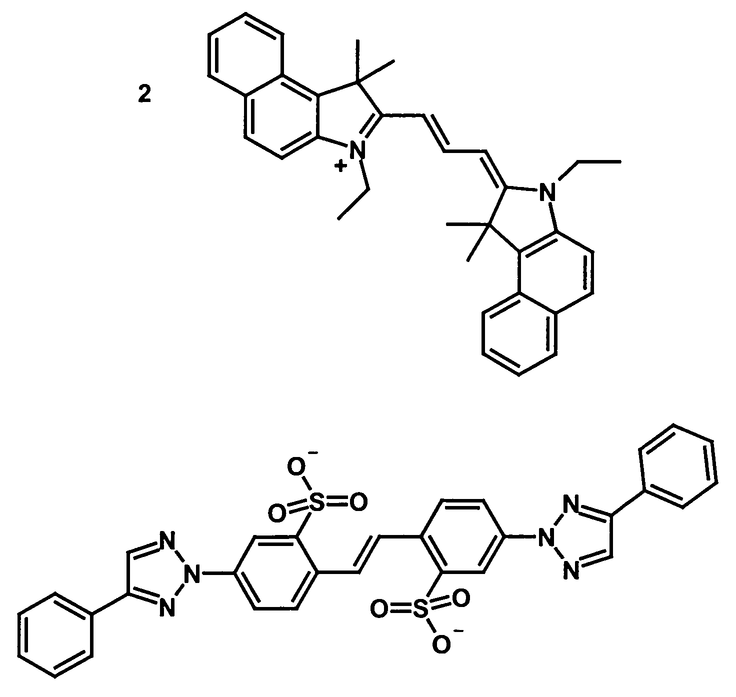

UV-Vis (MeOH) λ: 216 nm, 586 nm; ε (λ): 161,9 l/(g*cm), 146,2 l/(g*cm).

### Example 4

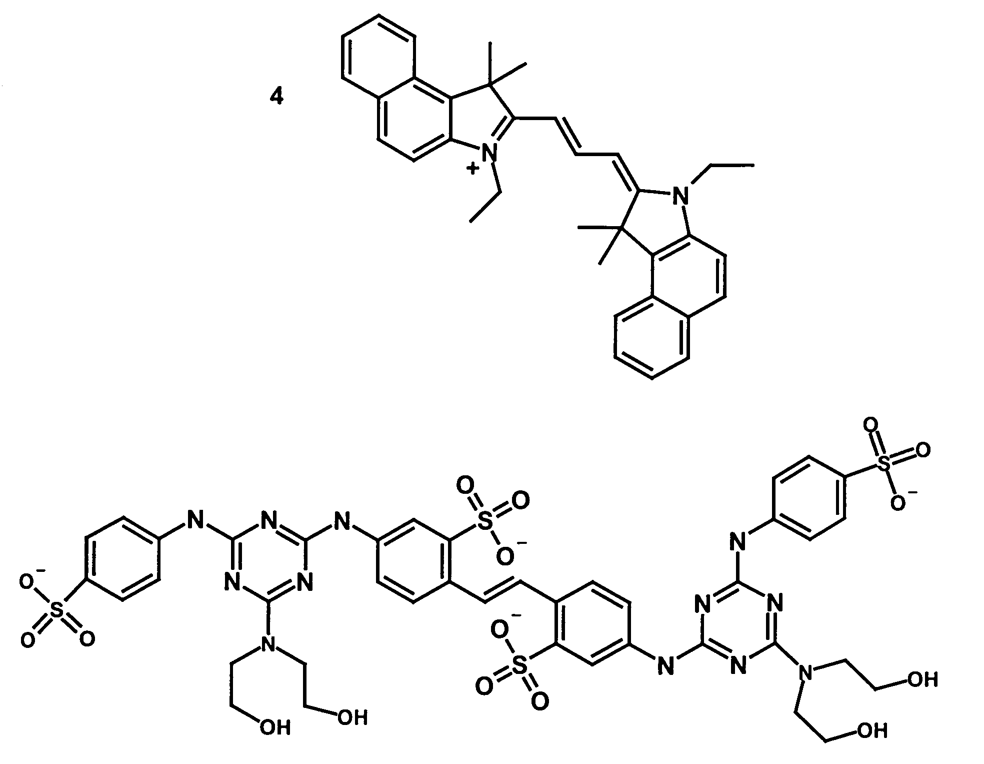

UV-Vis (MeOH) λ: 217 nm, 586 nm; ε (λ): 149,3 l/(g*cm), 146,5 l/(g*cm).

### Comparative Examples

For the lightfastness test a 0.5% solution of the cyanine / optical brightener complexes according to examples 1-4 in chloroform have been applied to filter paper by dipping. The coated paper was exposed to xenon emitters (300-400 nm, 50 W/m²) for 15 h.

For comparative purposes a 0.5% solution of cationic cyanine dye with iodide as inorganic counterion of formula (Id) has been applied in chloroform to filter paper by dipping. The coated paper was exposed to xenon emitters (300-400 nm, 50 W/m²) for 15 h.

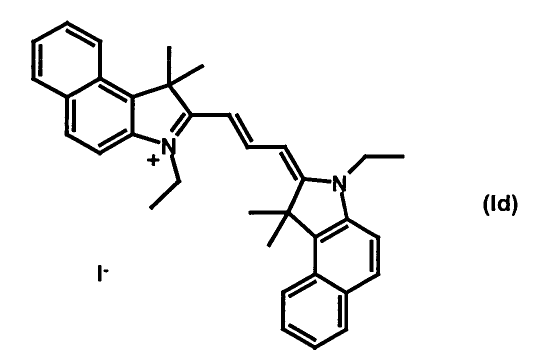

As a result, the cationic cyanine dye with iodide as inorganic counterion showed strong degradation, whereas cyanine / optical brightener complexes according to examples 1-4 showed only slight degradation.

## Claims

1. A compositions comprising at least one cationic cyanine dye of the general formula (I) 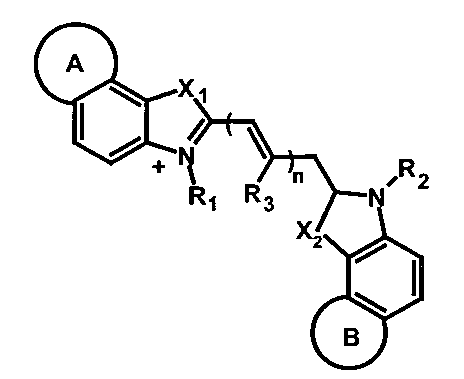 wherein
A and B represent, independently from each other, two hydrogen atoms or an anellated benzo ring in the positions [4,5], [5,6] or [6,7] of both indoline parts;
R₁ and R₂ represent, independently from each other, a C₁-C₈ alkyl, a C₁-C₈ alkylidene, a benzyl radical, optionally substituted by one or more C₁-C₈ alkoxy carbonyl, C₁-C₈ alkyl, C₁-C₈ alkoxy, nitro or dialkylamino radicals;
R₃ is a hydrogen radical a C₁-C₈ alkyl, a C₁-C₈ alkylidene, a benzyl radical, optionally substituted by one or more C₁-C₈ alkoxy carbonyl, C₁-C₈ alkyl, C₁-C₈ alkoxy, nitro or dialkylamino radicals;
X₁ and X₂ represent, independently from each other, O, S, C(CH₃)₂, NR' radicals, wherein R' is a C₁-C₈ alkyl, a C₁-C₈ alkylidene, a benzyl radical, optionally substituted by one or more C₁-C₈ alkoxy carbonyl, C₁-C₈ alkyl, C₁-C₈ alkoxy, nitro or dialkylamino radicals; and
n is 0 or 1;
and at least one anionic optical brightener selected from the group consisting of the general formulae (II), (III), (IV) or (V) in a stoichiometric ratio 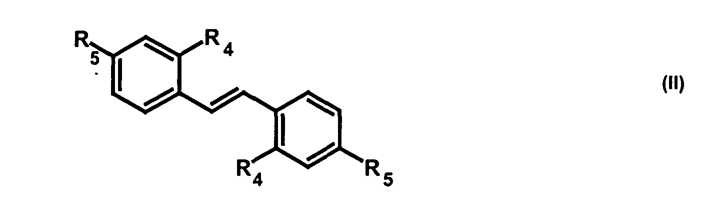 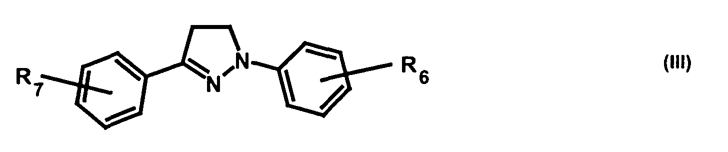 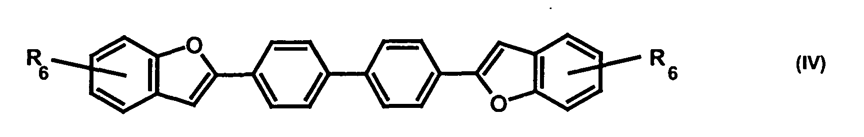 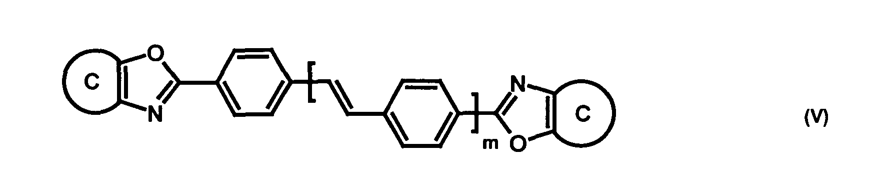 wherein,
the total negative charge of the anion is 2, 4 or 6;
R₄ is hydrogen, an oxy, an oxycarbonyl or an oxysulfonyl radical;
R₆ is an oxysulfonyl, an oxycarbonyl or 2-(oxysulfonyl)ethylsulfonyl radical;
R₇ is hydrogen or one or more C₁-C₄ alkyl or chlorine radicals;
R₅ is a hydrogen, a C₁-C₈ alkyl, a C₁-C₈ alkoxy, a 2-benzoxazole, which is optionally substituted at the benzo ring with one or more C₁-C₄ alkyl or C₁-C₄ alkoxy radicals, a dialkylamino, a 2-benzotriazyl, a 2-(4-phenyl)triazyl, which can be substituted by one or more C₁-C₄ alkyl, C₁-C₄ alkoxy or halogen radicals or an amino radical, or which can be further substituted with a radical of the formula 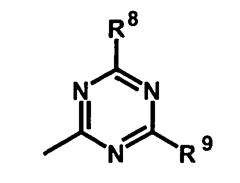 wherein
R₈ and R₉ represent, independently from each other, a C₁-C₄ alkoxy, a N-morpholino, a C₁-C₄ dialkylamino, a di(2-hydroxyethyl)amino, a (2-hydroxyethyl)amino or a phenylamino radical which carries 0 to 2 oxysulfonyl radicals;
ring C represents a benzo ring or a 5-phenyl radical, both bearing either one oxysulfonyl, one oxycarbonyl or one 2-(oxysulfonyl)ethylsulfonyl radical;
m is 0 or 1.

2. Composition according to claim 1, wherein the cationic cyanine dye is of formula (Ia) 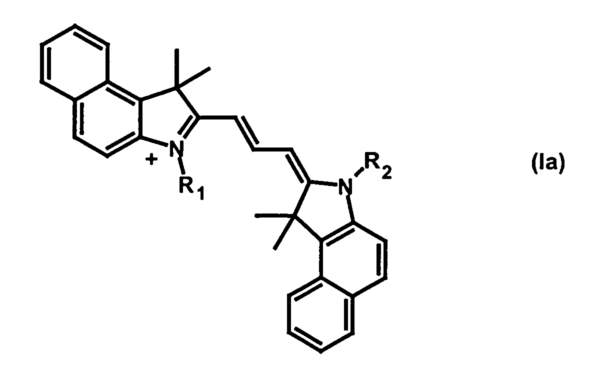 wherein R₁ and R₂ are defined as above.

3. Composition according to claim 1 or 2 **characterized in that** the anionic optical brightener is of the general formula (II) or (III).

4. A process for preparing a composition according to claim 1, **characterized by** the following steps:
(a) dissolving a halide of a cation of formula (I) with an alkali salt of an anion of formulae (II), (III), (IV) or (V) in an organic solvent to form a solution,
(b) removing the precipitate of alkali halide and
(c) isolating the composition.

5. A process according to claim 4, **characterized in that** the halide is iodide and the alkali salt is sodium salt.

6. Use of a composition according to claim 1 as the optical layer of an optical data storage media.

7. Use of a composition according to claim 6 **characterized in that** the optical layer of an optical data storage media is manufactured by the following steps:
(a) providing a first substrate;
(b) dissolving the compositions according claim 1 in an organic solvent to form a solution;
(c) coating the solution on the first substrate;
(d) drying the solution to form a solid layer of a composition according to claim 1, the optical layer;
with the following optional step to finish the optical data storage media:
(e) deposing a reflection layer on top of the optical layer;
(f) deposing a second substrate on top of the reflection layer.

8. Use according to claim 7 wherein the organic solvent is selected from methanol, ethanol, isopropanol, diacetone alcohol, 2,2,3,3-tetrafluoropropanol, trichloroethanol, 2-chloroethanol, octafluoropentanol, hexafluorobutanol acetone, methylisobutylketone, methylethylketone, or 3-hydroxy-3-methyl-2-butanone.
